## Europäisches Patentamt

## European Patent Office

## Office européen des brevets

(11) Veröffentlichungsnummer: **0 102 541**
**B1**

(12) **EUROPÄISCHE PATENTSCHRIFT**

(45) Veröffentlichungstag der Patentschrift:
16.12.87

(21) Anmeldenummer: 83107782.1

(22) Anmeldetag: 08.08.83

(51) Int. Cl.⁴: **C 08 G 18/76**, C 08 G 18/48,
C 08 L 71/02, C 08 J 3/08,
C 08 L 75/08

(54) Verfahren zur Herstellung von kompakten, wärmebeständigen Urethan- und Isocyanuratgruppen enthaltenden Kunststoffen.

(30) Priorität: 25.08.82 DE 3231497

(43) Veröffentlichungstag der Anmeldung:
14.03.84 Patentblatt 84/11

(45) Bekanntmachung des Hinweises auf die Patenterteilung:
16.12.87 Patentblatt 87/51

(84) Benannte Vertragsstaaten:
BE DE FR GB IT NL SE

(56) Entgegenhaltungen:
EP-A-0 032 380
DE-A-2 647 482
GB-A-1 497 692
US-A-4 041 105
US-A-4 184 990
US-A-4 299 924
US-A-4 314 038

(73) Patentinhaber: BASF Aktiengesellschaft, Carl-Bosch- Strasse 38, D-6700 Ludwigshafen (DE)

(72) Erfinder: Nissen, Dietmar, Dr., Ziegelhaeuser Landstrasse 31, D-6900 Heidelberg (DE)
Erfinder: Gerold, Friedrich, Leibstrasse 18, D-8013 Haar (DE)
Erfinder: Horn, Peter, Dr., Neue Stuecker 15, D-6900 Heidelberg (DE)
Erfinder: Hesse, Anton, Dr., Peter- Nickel- Strasse 15, D-6940 Weinheim (DE)
Erfinder: Marx, Matthias, Dr., Seebacher Strasse 49, D-6702 Bad Duerkheim (DE)

## Beschreibung

Die Herstellung von zelligen und kompakten Urethan- und Isocyanuratgruppen enthaltenden Kunststoffen ist bekannt.

Nach Angaben der DE-AS-23 59 386 (US-PS-4 070 416) werden Isocyanurat- und Oxazolidonringe enthaltende Duroplaste durch Umsetzung von polyfunktionellen Epoxiden und Polyisocyanaten in Gegenwart von Imidazol- und/oder Morpholinderivaten als Katalysatoren hergestellt.

Bekannt ist außerdem die Copolymerisation von ethylenisch ungesättigten Verbindungen und Polyisocyanaten. Gemäß DE-OS-24 32 952 (GB-PS-1 474 371) werden nach dieser Verfahrensweise beispielsweise Gußstücke, Einbettmassen und Laminate hergestellt.

Massive, Urethangruppen enthaltende Kunststoff-Formteile, Vergußmassen und Isolierungen werden gemäß DE-AS-26 23 401 (US-PS-4 163 095) aus isomeren und homologen Polyisocyanaten der Diphenylmethanreihe mit einem Gehalt an 2,4'-Diphenylmethan-diisocyanat von 10 bis 80 Gew.-% und Polyhydroxylverbindungen in einem NCO : OH-Gruppenverhältnis von 0,7 bis 1,5 : 1 erhalten.

Nachteilig nach diesem Verfahren ist, daß die Reaktionsmischungen reaktionsträge sind und zur Härtung höhere Temperaturen benötigen. Durch die anzuwendenden hohen Härtungstemperaturen bedingt, weisen die erhaltenen Formteile einen großen Schrumpf auf. Außerdem kommt es durch eine Gasbildungsreaktion zu Blasen enthaltenden Formteilen.

Zur Vermeidung dieser Nachteile werden nach Angaben der DE-OS-27 22 400 (US-PS-4 162 375 und USR 30 760) Isomeren- und/oder Homologengemische von Polyisocyanaten der Diphenylmethan-Reihe mit einem Gehalt an 2,4'-Diphenylmethan-disocyanat von mehr als 20 Gew.-% in Gegenwart von Trimerisierungskatalysatoren polymerisiert. Die Polymerisation kann gegebenenfalls auch in Gegenwart von polymerisierbaren, olefinisch ungesättigten Monomeren, Epoxidgruppen aufweisenden organischen Verbindungen und/oder Verbindungen mit reaktiven Wasserstoffatomen durchgeführt werden. Aufgrund der niedrigen Härtungstemperaturen konnte die Blasenbildung und der Schrumpf vermindert werden. Nachteilig ist jedoch, daß die mechanischen Eigenschaften der reinen Polyisocyanurat-Formteile den technischen Anforderungen nicht genügen und bei Mitverwendung von olefinisch ungesättigten Monomeren und/oder Polyepoxiden die Reaktionsführung und Katalysatorwahl problematisch ist. Vielfach läßt sich nicht vermeiden, daß die Formteile noch freie Monomeren enthalten. Bei Verwendung von Polyisocyanaten der Diphenylmethanreihe mit einem 2,4'-Diphenylmethan-diisocyanatgehalt von größer als 20 Gew.-% härten die Formteile nur sehr langsam vollständig durch. Außerdem sinken die mechanischen Eigenschaften, wie Schlagzähigkeit und Biegefestigkeit, durch eine in der Praxis häufig übliche Temperaturbehandlung von 190 bis 210°C über einen Zeitraum von einer und mehreren Stunden sehr stark ab.

Die Aufgabe der vorliegenden Erfindung bestand darin, ein Verfahren zur Herstellung von kompakten, wärmebeständigen Kunststoffen zu entwickeln, die im wesentlichen keinen Schrumpf zeigen und aus denen insbesondere Trennstege hergestellt werden können, die zur thermischen Trennung von Aluminiumprofilen geeignet sind.

Die Aufgabe wurde gelöst durch ein Verfahren zur Herstellung von kompakten, wärmebeständigen Urethan- und Isocyanuratgruppen enthaltenden Kunststoffen durch Umsetzung von organischen Polyisocyanaten und Polyolen in Gegenwart von Katalysatoren und gegebenenfalls Hilfsmitteln und Zusatzstoffen, das dadurch gekennzeichnet ist, daß man als Polyisocyanate Mischungen aus isomeren Diphenylmethan-diisocyanaten oder vorzugsweise Mischungen aus isomeren Diphenylmethan-diisocyanaten und Polyphenyl-polymethylen-polyisocyanaten mit jeweils einem Gehalt an 2,4'-Diphenylmethan-diisocyanat von kleiner als 20 Gew.-%, bezogen auf das Gesamtgewicht der Polyisocyanatmischung und als Polyole Polyether-polyole verwendet, die dispergierte Polymerpartikel, Polyharnstoffe und/oder Pfropfpolymere enthalten.

Aufgrund der speziell ausgewählten erfindungsgemäß verwendbaren Polyisocyanatmischungen und Polyether-polyol-Dispersionen aus der Vielzahl der bekannten Polyurethanausgangsstoffe ergeben sich beim erfindungsgemäßen Verfahren folgende Vorteile:

Die Härtungsreaktion verläuft schon bei Raumtemperatur mit genügend hoher Geschwindigkeit, ohne daß ein merkbares Absinken der Reaktivität gegen Ende der Umsetzung beobachtet wird.

Bei der Herstellung von Formkörpern werden nur Reaktionstemperaturen von maximal 70°C benötigt, üblicherweise sind jedoch Temperaturen von 20 bis 50°C ausreichend.

Die hergestellten Formteile zeigen im wesentlichen keinen Schrumpf. Sie besitzen sehr gute mechanische Eigenschaften und weisen insbesondere eine ausgezeichnete Wärmeformbeständigkeit sowie eine hohe Schlagzähigkeit auf.

Besonders hervorzuheben ist ferner, daß die mechanischen Eigenschaften, vorzugsweise die Schlagbiegefestigkeit, durch die in der Praxis bei der Pulverlackierung von Aluminiumprofilen häufig notwendige Temperaturbehandlung von 190 bis 210°C Objekttemperatur über einen Zeitraum von einer Stunde erheblich geringer absinken als bei der Verwendung unmodifizierter Polyether-polyole, so daß die Formteile insbesondere als Verbindungsstücke (Trennstege) für Aluminiumprofile geeignet sind. Dabei dieser Temperaturbehandlung des Formteils praktisch kein Schrumpf eintritt, ergibt sich auch keine Maßänderung an den Aluminiumprofilen.

Diese vorteilhaften Eigenschaften waren nicht vorhersehbar, da die ausgewählten Polyether-polyol-Dispersionen üblicherweise für die Herstellung von Polyurethan-Weichschaumstoffen Anwendung finden und dort zellöffnend wirken und die Tragfähigkeit verbessern. Es war daher überraschend, daß die Polyether- polyol-Dispersionen die schädigende Wirkung einer für massive Polyurethane extremen Temperaturbelastung in signifikanter Weise senken und den Volumenschrumpf bei der Härtungsreaktion erheblich minimieren können.

Bei dem erfindungsgemäßen Verfahren kommen als Polyisocyanate spezielle Mischungen aus isomeren Diphenylmethan-diisocyanaten und insbesondere Mischungen aus isomeren Diphenylmethan-diisocyanaten und Polyphenyl-polymethylen-polyisocyanaten mit jeweils einem Gehalt an 2,4'-Diphenylmethan-diisocyanaten von kleiner als 20 Gew.-%, vorzugsweise 8 bis 19 Gew.-% und insbesondere 12 bis 19 Gew.-%, bezogen auf das Gesamtgewicht der Polyisocyanatmischung zur Anwendung. Besonders bewährt haben sich und daher vorzugsweise verwendet werden Polyisocyanatmischungen aus 40 bis 90 Gew.-%, vorzugsweise 55 bis 80 Gew.-% isomeren Diphenylmethan-diisocyanaten, die ihrerseits im wesentlichen folgende Zusammensetzung aufweisen: 70 bis 20 Gew.-%, vorzugsweise 58 bis 38 Gew.-% 4,4'-Diphenylmethan-diisocyanat, weniger als 20 Gew.-%, vorzugsweise 19 bis 8 Gew.-% 2,4'-Diphenylmethan-diisocyanat und untergeordnete Mengen, vorzugsweise 0 bis 5 Gew.-% 2,2''-Diphenylmethan-diisocyanat, und 60 bis 10 Gew.-%, vorzugsweise 45 bis 20 Gew.-% Polyphenyl-polymethylen-polyisocyanat mit einer Funktionalität von 3 und größer, wobei die Gew.-%e bezogen sind auf das Gesamtgewicht der Polyisocyanatmischung. Verwendbar sind ferner mit Urethan- und/oder Isocyanuratgruppen modifizierte Polyisocyanatmischungen. Hierbei werden die isomeren Diphenylmethan-diisocyanate oder Mischungen aus isomeren Diphenylmethan-diisocyanaten und Polyphenyl-polymethylen-polyisocyanaten mit zweiwertigen niedermolekularen Alkoholen und/oder Polyoxyalkylenglykolen mit Molekulargewichten kleiner als 800, beispielsweise Polyoxyethylen-glykolen und vorzugsweise Polyoxypropylen-glykolen im Äquivalenzverhältnis der OH : NCO-Gruppen von 0,005 bis 0,3 : 1 umgesetzt oder die isomeren Diphenylmethan-diisocyanate oder vorzugsweise Mischungen aus isomeren Diphenylmethan-diisocyanaten und Polyphenyl-polymethylen-polyisocyanate werden in Gegenwart üblicher Trimerisierungskatalysatoren partiell, d. h. bis auf einen NCO-Gehalt von 15 bis 30 Gew.-%, vorzugsweise 20 bis 28 Gew.-%, trimerisiert und danach stabilisiert.

Die genannten, gegebenenfalls Urethan- oder Isocyanuratgruppen enthaltenden Polyisocyanatmischungen können einzeln oder in Form von Gemischen eingesetzt werden, wobei jedoch der erfindungsgemäß genannte Gehalt an 2,4'-Diphenylmethan-diisocyanat von kleiner als 20 Gew.-% eingehalten werden muß.

Erfindungswesentlich für die Durchführung des Verfahrens zur Herstellung von kompakten, wärmebeständigen Urethan- und Isocyanuratgruppen enthaltenden Kunststoffen ist die Verwendung von Polyether-polyolen, die dispergierte Polymerpartikel, Pfropfpolymerpartikel und/oder Polyharnstoffe enthalten, als Polyole. Derartige, als Polyole geeignete Polyether-polyol-Dispersionen, enthalten als kohärente Phase Polyether-polyole mit Funktionalitäten von 2 bis 8, vorzugsweise 2 bis 4 und Molekulargewichten von 500 bis 8000, vorzugsweise 2000 bis 6000 und als disperse Phase Polymerpartikel, Polyharnstoffe und/oder Pfropfpolymerpartikel mit Teilchengrößen kleiner als 30 µm, vorzugsweise kleiner als 10 µm und insbesondere kleiner als 5 µm, in Mengen von 3 bis 50 Gew.-%, vorzugsweise 8 bis 30 Gew.-%, bezogen auf das Gesamtgewicht der Polyether-polyol-Dispersion.

Die Polyether-polyole werden nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren oder durch kationische Polymerisation mit Lewissäuren, wie Antimonpentachlorid, Borfluorid-Etherat u.a. als Katalysatoren aus einem oder mehreren Alkylenoxiden mit 2 bis 4 Kohlenstoffatomen im Alkylrest und einem Startermolekül, das 2 bis 8, vorzugsweise 2 bis 4 aktive Wasserstoffatome enthält, hergestellt.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4-, 2,3- und 2,6-Toluylendiamin und 4,4'-, -2,4'- und 2,2'-Diamino-diphenylmethan. Als Polyether-polyole, hergestellt aus Verbindungen der erwähnten Gruppe sind besonders interessant N,N,N',N'-Tetrakis-(2-hydroxy-ethyl)-ethylendiamin, N,N,N',N'-Tetrakis-(2-hydroxy-propyl)-ethylendiamin, N,N,N',N'',N''-Pentakis-(2-hydroxy-propyl)-diethylentriamin, Phenyldiisopropanolamin und höhere Alkylenoxidaddukte von Anilin, Diaminodiphenylmethanen und Toluylendiaminen.

Als Startermoleküle kommen ferner in Betracht: Alkanolamine, wie Ethanolamin, Diethanolamin, N-Methyl- und N-Ethylethanolamin, N-Methyl- und N-Ethyl-diethanolamin und Triethanolamin, Ammoniak, Hydrazin und Hydrazide. Vorzugsweise verwendet werden mehrwertige, insbesondere zwei- bis vierwertige Alkohole, wie Ethylenglykol, Propylenglykol-1,2 und -1,3, Diethylenglykol, Dipropylenglykol, Butylenglykol-1,4, Hexamethylenglykol-1,6, Glycerin, Trimethylol-propan, Pentaerythrit, Sorbit und Saccharose.

Als disperse Phase kommen in Betracht: Polymerpartikel, beispielsweise aus Polystyrol, mit Divinylbenzol vernetztem Polystyrol, Polyacrylnitril, Copolymeren aus Styrol und Acrylnitril im Gewichtsverhältnis von 95 : 5 bis 5 : 95, vorzugsweise 60 : 40 bis 40 : 60, Polyvinylchlorid, vollständig polyisocyanuratisierte Isocyanate, beispielsweise isocyanuratisiertes 2,4- und/oder 2,6-Toluylendiisocyanat, 4,4'-, 2,4'-, 2,2'-Diphenylmethan-diisocyanat und/oder Polyphenyl-polymethylen-polyisocyanat, Polyharnstoffe, hergestellt durch Polyaddition von niedermolekularen Monoaminen und/oder vorzugsweise niedermolekularen Polyaminen, beispielsweise solchen mit Molekulargewichten von 32 bis 300 an Mono- und/oder vorzugsweise Polyisocyanaten in Gegenwart von Lösungs- und/oder Verdünnungsmittel oder vorzugsweise Polyether-polyolen und Pfropfpolyether-polyole, hergestellt durch in situ Polymerisation von olefinisch ungesättigten Monomeren, vorzugsweise von Styrol, Acrylnitril oder Mischungen aus Styrol und Acrylnitril im Gewichtsverhältnis von 60 : 40 bis 40 : 60 in Gegenwart von Polyether-polyolen.

Die erfindungsgemäß verwendbaren Polymer-Polyether-polyol-Dispersionen können beispielsweise durch Emulsionspolymerisation von olefinisch ungesättigten Monomeren in wäßrigem Medium, Mischen der Emulsionen mit Polyether-polyolen und Entwässern der Polymer-Polyether-polyol-Dispersion entsprechend den Angaben der DE-OS-27 40 672 (US-PS-4 251 411) hergestellt werden. Nach einer anderen Verfahrensvariante werden die obengenannten Polymeren in Gegenwart von Polyether-polyolen in situ mit hohen örtlichen Energiedichten, beispielsweise Energiedichten von 36 bis 10800 MJ/m$^3$ auf Teilchengrößen kleiner als 7 µm zerkleinert und gleichzeitig dispergiert entsprechend den Ausführungen in der EP-OS-11 752 (US-4 304 708).

Die Herstellung geeigneter Polyharnstoffe wird beispielsweise beschrieben in der DE-AS-12 60 412 (US-PS-3 325 421) und DE-OS-25 13 816 (US-PS-4 042 537). Erfindungsgemäß verwendbare Pfropfpolyether-polyole-Dispersionen können beispielsweise hergestellt werden entsprechend den Publikationen DE-PS-10 77 430 (GB-PS-922 457), DE-PS-11 52 536 (GB-PS-1 040 452), DE-PS-11 52 537 (FR-A-1 364 829), DE-PS-12 22 669 (US-3 304 273, US-3 383 351 und US-3 523 093) und DE-OS-23 59 617 (US-PS-3 823 201 und USR-29 014).

Zur Herstellung der kompakten, wärmebeständigen Urethan- und Isocyanuratgruppen enthaltenden Kunststoffe werden die erfindungsgemäß verwendbaren Polyisocyanatmischungen mit einem 2,4'-Diphenylmethan-Gehalt von kleiner als 20 Gew.-% und die Polymer-, Polyharnstoff- und/oder Pfropfpolyether-Polyether-polyol-Dispersionen in solchen Mengen zur Reaktion gebracht, daß das Äquivalentverhältnis von NCO : OH-Gruppen 40 bis 5 : 1, vorzugsweise 30 bis 15 : 1 beträgt.

Die Reaktion wird in Gegenwart von Katalysatoren und gegebenenfalls Hilfsmitteln und/oder Zusatzstoffen, jedoch in Abwesenheit von Treibmitteln in üblichen Mengen durchgeführt.

Als Katalysatoren für die Bildung der Isocyanuratgruppen haben sich die üblichen Cyclisierungs- und Polymerisationskatalysatoren für Polyisocyanate bewährt. Als Beispiele seien genannt: starke Basen, wie quarternäre Ammoniumhydroxide, beispielsweise Benzyltrimethylammoniumhydroxid; Alkalimetallhydroxide, beispielsweise Natrium- oder Kaliumhydroxid; Alkalimetallalkoxide; beispielsweise Natriummethylat und Kaliumisopropylat; Trialkylphosphine, beispielsweise Triethylphosphin; Alkylaminoalkylphenole, beispielsweise 2,4,6-Tris-(dimethylaminomethyl)-phenol; 3- und/oder 4-substituierte Pyridine, beispielsweise 3- oder 4-Methylpyridin; metall-organische Salze, beispielsweise Tetrakis-(hydroxyethyl)-natriumborat; Friedel-Crafts-Katalysatoren, beispielsweise Aluminiumchlorid, Eisen-(III)-chlorid, Borfluorid und Zinkchlorid, Alkalimetallsalze von schwachen organischen Säuren und Nitrophenolaten, beispielsweise Kaliumoctoat, Kalium-2-ethyl-hexoat, Kaliumbenzoat, Natriumpikrat und Phthalimid-kalium und stark basische N,N',N''-Tris-(dialkylaminoalkyl)-s-hexahydrotriazine, beispielsweise das N,N',N''-Tris-(dimethylaminopropyl)-s-hexahydrotriazin, gegebenenfalls in Kombination mit aliphatischen niedermolekularen Mono- und/oder Dicarbonsäuren, beispielsweise Essigsäure und/oder Adipinsäure oder aromatischen Carbonsäuren, wie Benzoesäure.

Die geeignete Menge an Isocyanuratgruppen bildenden Katalysatoren ist abhängig von der Wirksamkeit des in Frage kommenden Katalysators. Im allgemeinen hat es sich als zweckmäßig erwiesen, 0,1 bis 10 Gew.-Teile, vorzugsweise 0,25 bis 5 Gew.-Teile, Katalysator für jeweils 100 Gew.-Teile Polyether-polyol-Dispersion zu verwenden.

Vorzugsweise zur Anwendung kommen Kalium- und Natriumacetat und insbesondere Kaliumacetat in Form einer 20 bis 50 gew.-%-igen Lösung in Ethylenglykol, wobei pro 100 Gew.-Teile Polyether-polyol-Dispersion 0,01 bis 0,4, vorzugsweise 0,05 bis 0,35 und insbesondere 0,1 bis 0,25 Gew.-Teile Kaliumionen eingesetzt werden.

Zur Beschleunigung der Polyurethanbildung kann es ferner vorteilhaft sein, neben den Cyclisierungs- und Polymerisationskatalysatoren zusätzlich Polyurethankatalysatoren mitzuverwenden. Bewährt haben sich beispielsweise tertiäre Amine, wie Dimethylbenzylamin, N,N,N',N'-Tetramethyldiamino-ethylether, Bis-(diphenylaminopropyl)-harnstoff, N-Methyl- bzw. N-Ethylmorpholin, Dimethylpiperazin, 1,2-Dimethylimidazol, 1-Aza-bicyclo-(3,3,0)-octan oder deren Gemische und vorzugsweise Triethylendiamin, Metallsalze, wie Zinndioctoat, Bleioctoat, Zinn-diethylhexoat und vorzugsweise Zinn-(II)-salze und Dibutylzinndilaurat sowie insbesondere Mischungen aus tert. Aminen und organischen Zinnsalzen und Metallsalz-Komplexe aus Amidinen und organischen Zinnsalzen. Vorzugsweise verwendet werden 0,1 bis 5,0 Gew.-% Katalysator auf Basis tert. Amine und/oder 0,01 bis 1,0 Gew.-% Metallsalze, bezogen auf das Gewicht der Polyether-polyol-Dispersion.

Als Hilfsmittel und Zusatzstoffe seien beispielsweise genannt: flammwidrige Zusatzstoffe wie z. B. roter Phosphor, Halogenphosphorsäureester, Antimontrioxid und Melamin, anorganische Füllstoffe, wie z. B. Quarzmehl, Kreide, Schwerspat und Aluminiumoxid, Pigmente, wie z. B. Zinksulfid, Cadmiumsulfid, Titandioxid und Eisenoxide, organische Pigmente und organische Farbstoffe, Weichmacher, wie z. B. Dioctylphthalate, oder Triphenylphosphate, und Verstärkungsmittel wie z. B. Glasfasern, Glasvliese, Glasgewebe, Glas-Flakes, Glaskugeln, Flugasche, Kohlenstoff-Fasern, Kevlar-Fasern usw.

Zur Durchführung des erfindungsgemäßen Verfahrens werden die ausgewählten Polyisocyanatmischungen

4

und Polyether-polyol-Dispersionen in Gegenwart von Katalysatoren sowie gegebenenfalls Hilfsmitteln und Zusatzstoffen bei Temperaturen von maximal 70°C, vorzugsweise 30 bis 50°C, intensiv gemischt, die Reaktionsmischung in offene oder geschlossene Formen eingebracht und aushärten gelassen. Vorzugsweise werden die Aufbaukomponenten jedoch mit Hilfe der bekannten Reaktionsspritzgußtechnik zu Formteilen verarbeitet.

Die Aushärtung der Formteile erfolgt bei Temperaturen von 20 bis 70°C, vorzugsweise von 25 bis 55°C. Die Formteile sind nach 15 bis 45 Sekunden entformbar und können gegebenenfalls noch bei Temperaturen von 100 bis 200°C 0,5 bis 2 Stunden getempert werden.

Die Polymermatrix der nach dem erfindungsgemäßen Verfahren hergestellten kompakten Urethan- und Isocyanuratgruppen enthaltenden Kunststoffe besitzt eine Dichte von 1,05 bis 1,20 g/cm$^3$. Sie sind sehr gut wärmestabil und dimensionsbeständig und eignen sich zur Herstellung von Formteilen für die Elektro- und Maschinenbauindustrie. Vorzugsweise verwendet werden die Produkte zur Herstellung von Trennstegen für Aluminiumprofile für den Fensterbau.

## Beispiel 1

A-Komponente: Mischung aus

· 97,80 Gew.-Teilen einer Pfropf-polyether-polyoldispersion mit einer Hydroxylzahl von 29 und einem Copolymerisatgehalt von 20 Gew.-%, bezogen auf das Gesamtgewicht, hergestellt durch in situ Polymerisation einer Mischung aus Styrol und Acrylnitril im Gewichtsverhältnis 3 : 2 in Gegenwart eines Polyether-polyols auf Basis Trimethylolpropan-Propylenoxid und Ethylenoxid,

0,5 Gew.-Teilen Ortho-Kieselsäuretetraethylester,

1,55 Gew.-Teilen einer 40 gew.-%-igen Lösung von Kaliumacetat in Ethylenglykol und

0,15 Gew.-Teilen eines Amidin-Zinnsalz-Komplexes.

B-Komponente: Mischung aus

19,5 Gew.-Teilen Polyphenyl-polymethylen-polyisocyanat mit einer Funktionalität von ca. 3,3,

58 Gew.-Teilen 4,4'-Diphenylmethan-diisocyanat,

18,5 Gew.-Teilen 2,4'-Diphenylmethan-diisocyanat und

4 Gew.-Teilen Di- und Oligopropylenglykolen NCO-Gehalt der Mischung: 29,5 Gew.-%.

100 Gew.-Teile der A-Komponente und 200 Gew.-Teile der B-Komponente wurden mit Hilfe einer Hochdruckdosiermaschine vom Typ ®Puromat 30 der Elastogran-Maschinenbau GmbH gemischt und nach der Reaktionsspritzgußtechnik in einer geschlossenen Metallform mit den Innenabmessungen 400x200x4 mm zu einer Formplatte verarbeitet, die nach 30 Sekunden entformt werden konnte. Die Formtemperatur betrug 50°C, die der A- und B-Komponente 30°C.

An dem Formteil wurden folgende mechanische Eigenschaften gemessen:

|  |  | unge-tempert | getempert 200°C/1 h |
| --- | --- | --- | --- |
| Reißfestigkeit nach DIN 53455 | [N/mm$^2$] | 35 |  |
| Reißdehnung nach DIN 53455 | [%] | 4 |  |
| Schlagzähigkeit nach DIN 53455 | [kJ/m$^2$] | 55 | 35 |
| Grenzbiegespannung nach DIN 53452 | [N/mm$^2$] | 105 |  |
| Wärmeformbeständigkeit nach ISO-75/B | [°C] | 194 |  |

Die Platten wiesen einen Längenschrumpf von 0,9 % auf, der durch die Temperung auf 1,1 % anstieg.

Verringerte man den Katalysatorgehalt der A-Komponente auf 1,1 Gew.-Teile einer 40 gew.-%-igen Lösung von Kaliumacetat in Ethylenglykol und 0,05 Gew.-Teile des Amidin-Zinnsalz-Komplexes, so ließen sich die auf 20°C temperierten A- und B-Komponenten mit Hilfe einer Niederdruckmaschine mechanisch dosieren, mischen und in auf 30°C vorgewärmte Aluminiumprofile eingießen, in denen sie in 12 bis 15 Sekunden zu thermischen Trennstegen aushärteten. Nach dem Abkühlen der Reaktionsmasse zeigten die Profile keinen Verzug. Ferner trat nach der Pulverlackierung bei einer Einbrenntemperatur von 190 bis 200°C kein Verzug und keine Ablösung des Kunststoffes von der Aluminiumoberfläche auf.

## Beispiel 2

A-Komponente: Mischung aus

98,2 Gew.-Teilen einer Polymer-polyether-polyoldispersion mit einer Hydroxylzahl von 29 und einem Polymerisatgehalt von 20 Gew.-%, bezogen auf das Gesamtgewicht, hergestellt durch Zerkleinern und

5

Dispergieren von sprühgetrocknetem, stabilisiertem Polyvinylchlorid, sogenanntes Pasten-PVC, in situ in Gegenwart eines Polyether-polyols auf Basis Trimethylolpropan-Propylenoxid und Ethylenoxid gemäß der EP-OS-11 752 (US-4 304 708),
0,5 Gew.-Teilen Ortho-Kieselsäuretetraethylester,
1,2 Gew.-Teilen einer 40 gew.-%-igen Lösung von Kaliumacetat in Ethylenglykol und
0,1 Gew.-Teilen eines Amidin-Zinnsalz-Komplexes.

B-Komponente: wie in Beispiel 1
100 Gew.-Teile der A-Komponente und 200 Gew.-Teile der B-Komponente werden mit Hilfe einer Niederdruck-Dosiermaschine vom Typ F 20 der Elastogran-Maschinenbau GmbH gemischt und in eine offene, senkrecht stehende Metallgießform mit den Abmessungen 200x300x4 mm eingetragen. Die Formtemperatur betrug 45°C, die der A- und B-Komponente 23°C.
Die Platte konnte nach 45 Sekunden entformt werden. An dem Formteil wurden folgende mechanische Eigenschaften gemessen:

|  |  | unge-tempert | getempert 200°C/1 h |
|---|---|---|---|
| Schlagzähigkeit nach DIN 53453 | $[kJ/m^2]$ | 48 | 32 |
| Wärmeformbeständigkeit nach ISO-75/B | $[°C]$ | 190 | |

Die Platten wiesen einen Längenschrumpf von 1,0 % auf der sich durch die Temperung nicht verändert.


## Beispiel 3

A-Komponente: Mischung aus
98,2 Gew.-Teilen einer Polyharnstoff-polyether-polyoldispersion mit einer Hydroxylzahl von 30 und einem Polyharnstoffgehalt von 20 Gew.-%, bezogen auf das Gesamtgewicht, hergestellt gemäß der DE-AS-12 60 412 (US-PS-3 325 421) in situ in Gegenwart eines Polyether-polyols auf Basis Trimethylolpropan-Propylenoxid und Ethylenoxid durch Polyaddition eines Isomerengemisches von 80 Gew.-% 2,4- und 20 Gew.-% 2,6-Toluylendiisocyanat an Hydrazin,
0,5 Gew.-Teilen Ortho-Kieselsäuretetraethylester,
1,2 Gew.-Teilen einer 40 gew.-%-igen Lösung von Kaliumacetat in Ethylenglykol und
0,1 Gew.-Teilen eines Amidin-Zinnsalz-Komplexes.

B-Komponente: wie in Beispiel 1
100 Gew.-Teile der A-Komponente und 200 Gew.-Teile der B-Komponente werden, wie in Beispiel 2 beschrieben, zu Formplatten verarbeitet, die folgende mechanische Eigenschaften aufwiesen:

|  |  | unge-tempert | getempert 200°C/1 h |
|---|---|---|---|
| Schlagzähigkeit nach DIN 53453 | $[kJ/m^2]$ | 51 | 30 |
| Wärmeformbeständigkeit nach ISO-75/b | $[°C]$ | 220 | |

Die Platten wiesen einen Längenschrumpf von 1,2 % auf der durch die Temperung auf 1,4 % anstieg.


## Vergleichsbeispiel

Man verfuhr analog den Angaben des Beispiels 1, verwendete jedoch anstelle der Pfropf-polyether-polyol-Dispersion 97,80 Gew.-Teile eines Blockcopolyethertriols mit einer Hydroxylzahl von 27 auf Basis von Trimethylolpropan-Propylenoxid und Ethylenoxid.
An den erhaltenen Formplatten wurden die folgenden mechanischen Eigenschaften gemessen:

| | | unge-tempert | getempert 200°C/1 h |
|---|---|---|---|
| Reißfestigkeit nach DIN 53455 | [N/mm²] | 28 | |
| Reißdehnung nach DIN 53455 | [%] | 3 | |
| Schlagzähigkeit nach DIN 53453 | [kJ/m²] | 40 | 21 |
| Grenzbiegespannung nach DIN 53452 | [N/mm²] | 71 | |
| Wärmeformbeständigkeit nach ISO-75/B | [°C] | 180 | |

Die Platten wiesen einen Längenschrumpf von 1,7 % auf, der durch die Temperung auf 2,2 % anstieg.

Verarbeitet man das Produkt analog den Angaben von Beispiel 1 nach Verringerung des Katalysatorgehalts zu Trennstegen für Aluminiumprofile, so zeigten die Profile bereits nach Abkühlung der Reaktionsmasse Verzugserscheinungen, die nach der Behandlung zur Pulverlackierung (Einbrenntemperatur 190-200°C) zur Unbrauchbarkeit der Profile führten. Ferner löste sich der Kunststoff durch den Volumenschrumpf teilweise von der Metalloberfläche ab.

## Patentansprüche

1. Verfahren zur Herstellung von kompakten, wärmebeständigen Urethan- und Isocyanuratgruppen enthaltenden Kunststoffen durch Umsetzung von organischen Polyisocyanaten und Polyolen in Gegenwart von Katalysatoren und gegebenenfalls Hilfsmitteln und Zusetzstoffen, dadurch gekennzeichnet, daß man als Polyisocianate Mischungen aus isomeren Diphenylmethan-diisocyanaten oder Mischungen aus isomeren Diphenylmethan-diisocyanaten und Polyphenyl-polymethylen-polyisocyanaten mit einem Gehalt an 2,4'-Diphenylmethan-diisocyanat von kleiner als 20 Gew.-% bezogen auf das Gesamtgewicht der Polyisocyanatmischung und als Polyole Polyetherpolyol-Dispersionen verwendet, die enthalten als kohärente Phase Polyetherpolyole mit einer Funktionalität von 2 bis 8 und einem Molekulargewicht von 500 bis 8000 und als disperse Phase Polymerpartikel, Polyharnstoffe und/oder Pfropfpolymerpartikel mit Teilchengrößen kleiner als 30 µm in einer Menge von 3 bis 50 Gew.-%, bezogen auf das Gesamtgewicht der Polyetherpolyol-Dispersion.

2. Verfahren nach Anspruch 1, dadurch gekennzeichnet, daß die Mischung aus isomeren Diphenylmethan-diisocyanaten und Polyphenyl-polymethylen-polyisocyanaten einen Gehalt an 2,4'-Diphenylmethan-diisocyanat von 8 bis 19 Gew.-%, bezogen auf das Gesamtgewicht, besitzen.

3. Verfahren nach Anspruch 1, dadurch gekennzeichnet, daß die Pfropfpolymere enthaltenden Polyetherpolyole durch in situ Polymerisation von olefinisch ungesättigten Monomeren in Polyether-polyolen hergestellt werden.

4. Verfahren nach Anspruch 3, dadurch gekennzeichnet, daß man als olefinisch ungesättigte Monomere Styrol, Acrylnitril oder Mischungen aus Styrol und Acrylnitril im Gewichtsverhältnis 95 : 5 bis 5 : 95 verwendet.

5. Verfahren nach Anspruch 1, dadurch gekennzeichnet, daß die dispergierten Polymerpartikel aus mit Divinylbenzol vernetztem Polystyrol, Polyacrylnitril, Copolymeren aus Styrol und Acrylnitril im Gewichtsverhältnis 95 : 5 bis 5 : 95, Polyvinylchlorid, polyisocyanuratisiertem 2,4- und/oder 2,6-Toluylendiisocyanat, polyisocyanuratisiertem 4,4'-, 2,4'-, 2,2'-Diphenylmethan-diiso-cyanat und/oder polyisocyanuratisiertem Polyphenyl-polymethylen-polyisocyanat bestehen.

6. Verfahren nach Anspruch 1, dadurch gekennzeichnet, daß die dispergierten Polymerpartikel eine Teilchengröße kleiner als 7 µm besitzen und hergestellt werden durch in situ Zerkleinerung der Polymeren im Polyether-polyol mit einer Energiedichte von 36 bis 10800 MJ/m³.

7. Verfahren nach Anspruch 1, dadurch gekennzeichnet, daß die dispergierten Polyharnstoffe hergestellt werden durch Polyaddition von niedermolekularen Polyaminen und organischen Polyisocyanaten in Gegenwart der Polyether-polyole.

8. Verfahren nach Anspruch 1, dadurch gekennzeichnet, daß die Polyisocyanate und Polyether-polyole in einem NCO : OH-Äquivalenzverhältnis von 40 bis 5 : 1 umgesetzt werden.

9. Verfahren nach Anspruch 1, dadurch gekennzeichnet, daß als Katalysatoren Cyclisierungs- und/oder Polymerisationskatalysatoren für Polyisocyanate verwendet werden.

10. Verfahren nach Anspruch 1, dadurch gekennzeichnet, daß die Aufbaukomponenten nach der Reaktionsspritzgußtechnik zu Formteilen verarbeitet werden.

## Claims

1. A process for the preparation of a compact, heat-resistant plastic containing urethane and isocyanurate groups by reacting organic polyisocyanates and polyols in the presence of a catalyst and, if required, assistants and additives, wherein the polyisocyanates used are mixtures of isomeric diphenylmethane disocyanates or mixtures of isomeric diphenylmethane diisocyanates and polyphenylpolymethylene polyisocyanates containing less than 20 % by weight, based on the total weight of the polyisocyanate mixture, of 2,4'-diphenylmethane diisocyanate, and the polyols used are polyetherpolyol dispersions which contain, as the coherent phase, polyetherpolyols having a functionality of from 2 to 8 and a molecular weight of from 500 to 8,000 and, as the disperse phase, polymer particles, polyureas and/or graft polymer particles having particle sizes smaller than 30 $\mu$m in an amount of from 3 to 50 % by weight, based on the total weight of the polyetherpolyol dispersion.

2. A process as claimed in claim 1, wherein the mixture of isomeric diphenylmethane diisocyanates and polyphenylpolymethylene polyisocyanates contains from 8 to 19 % by weight, based on the total weight, of 2,4'-diphenyl-methane diisocyanate.

3. A process as claimed in claim 1, wherein the polyetherpolyols containing the graft polymers are prepared by in situ polymerization of olefinically unsaturated monomers in polyetherpolyols.

4. A process as claimed in claim 3, wherein styrene, acrylonitrile or a mixture of styrene and acrylonitrile in a weight ratio of from 95 : 5 to 5 : 95 is used as the olefinically unsaturated monomers.

5. A process as claimed in claim 1, wherein the dispersed polymer particles can consist of polystyrene crosslinked with divinylbenzene, polyacrylonitrile, copolymers of styrene and acrylonitrile in a weight ratio of from 95 : 5 to 5 : 95, polyvinyl chloride, 2,4- and 2,6-toluylene diisocyanate containing polyisocyanurate groups, 4,4'-, 2,4'- and 2,2'-diphenylmethane diisocyanate containing polyisocyanurate groups and/or polyphenylpolymethylene polyisocyanate containing polyisocyanurate groups.

6. A process as claimed in claim 1, wherein the dispersed polymer particles have a particle size smaller than 7 $\mu$m and are prepared by in situ comminution of the polymers in the polyetherpolyol with an energy density of from 36 to 10,800 MJ/m$^3$.

7. A process as claimed in claim 1, wherein the dispersed polyureas are prepared by polyaddition of low molecular weight polyamines and organic polyisocyanates in the presence of polyetherpolyols.

8. A process as claimed in claim 1, wherein the polyisocyanates and polyetherpolyols are reacted in amounts such that the ratio of the number of equivalents of NCO to the number of equivalents of OH is from 40 : 1 to 5 : 1.

9. A process as claimed in claim 1, wherein the catalysts used are cyclization and/or polymerization catalysts for polyisocyanates.

10. A process as claimed in claim 1, wherein the components are processed to moldings by reaction injection molding.


**Revendications**

1. Procédé de fabrication de matières plastiques à groupes uréthanne et isocyanate compactes, résistant à la chaleur, par la réaction de polyols et de polyisocyanates organiques en présence de catalyseurs et éventuellement d'additifs et d'adjuvants, caractérisé en ce que l'on utilise en tant que polyisocyanates des mélanges de diisocyanates de diphényl-méthane isomères ou des mélanges de diisocyanates de diphényl-méthane isomères et de polyisocyanates de polyphényl-polyméthylène, dont la teneur en diisocyanate de 2,4'-diphényl-méthane est inférieure à 20 % àu poids total du mélange des polyisocyanates, et en tant que polyols des dispersions de polyéther-polyols, dont la phase cohérente est constituée par des polyéther-polyols d'un poids moléculaire de 500 à 8000 et d'une fonctionnalité de 2 à 8, et dont la phase dispersée est constituée par des polymères, polyurées et(ou) polymères de greffage en particules d'une granulométrie inférieure à 30 $\mu$m, en une proportion comprise entre 3 et 50 % du poids total de la dispersion de polyéther-polyols.

2. Procédé suivant la revendication 1, caractérisé en ce que le mélange de diisocyanates de diphényl-méthane isomères et de polyisocyanates de polyphényl-polyméthylène contient du diisocyanate de 2,4'-diphényl-méthane en une proportion comprise entre 8 et 19 % du poids total.

3. Procédé suivant la revendication 1, caractérisé en ce que les polyéther-polyols, contenant des polymères de greffage, sont préparés par une polymérisation in situ de monomères à insaturation oléfinique dans des polyétherpolyols.

4. Procédé suivant la revendication 3, caractérisé en ce que les monomères à insaturation oléfinique sont choisis parmi le styrène et l'acrylonitrile ou les mélanges de styrène et d'acrylonitrile dans une proportion pondérale comprise entre 95 : 5 et 5 : 95.

5. Procédé suivant la revendication 1, caractérisé en ce que les particules de polymères dispersées sont constituées de polystyréne réticulé par du divinylbenzène, de polyacrylonitrile, de copolymères du styrène et de l'acrylonitrile dans une proportion pondérale de 95 : 5 à 5 : 95, de poly(chlorure de vinyle), de diisocyanate de 2,4- et(ou) de 2,6-toluylène polyisocyanuraté, de diisocyanate de 4,4'-, 2,4'-, 2,2'-diphényl-méthane polyisocyanuraté et(ou) de polyisocyanate de polyphényl-polyméthylène polyisocyanuraté.

6. Procédé suivant la revendication 1, caractérisé en ce que les particules de polymères dispersées possèdent une granulométrie inférieure à 7 $\mu$m et sont produites par un fractionnement in situ des polymères dans le polyéther-polyol sous une densité d'énergie de 36 à 10 800 MJ/m$^3$.

7. Procédé suivant la revendication 1, caractérisé en ce que les polyurées dispersées ont été préparées par une polyaddition de polyisocyanates organiques et de polyamines à bas poids moléculaire en présence des polyéther-polyols.

8. Procédé suivant la revendication 1, caractérisé en ce que l'on fait réagir les polyisocyanates et les polyéther-polyols dans un rapport des équivalents NCO et OH compris entre 40 : 1 et 5 : 1 .

9. Procédé suivant la revendication 1, caractérisé en ce que les catalyseurs sont choisis parmi les catalyseurs de cyclisation et(ou) de polymérisation pour les polyisocyanates.

10. Procédé suivant la revendication 1, caractérisé en ce que les composants structurels sont transformés par la technique du moulage par injection en articles façonnés.